# EUROPÄISCHE PATENTSCHRIFT

(11) **EP 2 146 162 B1**
(45) Veröffentlichungstag und Bekanntmachung des Hinweises auf die Patenterteilung: **30.03.2016**
(21) Anmeldenummer: 09004827.3
(22) Anmeldetag: 01.04.2009
(51) Int. Cl.: F25D 3/08, F28D 20/02, C09K 5/06

(54) **Temperierelement und Verfahren zum Betrieb eines Isolierbehälters**
Tempering element and method for operating an insulation container
Elément d'équilibrage des températures et procédé destiné au fonctionnement d'un récipient d'isolation

(30) Priorität: 10.07.2008 DE 102008032531
(43) Veröffentlichungstag der Anmeldung: 20.01.2010
(73) Patentinhaber: Delta T GmbH, 35394 Giessen (DE)
(72) Erfinder: Nehring, Dirk, Dr., 35043 Marburg (DE)
(74) Vertreter: Schmid, Rudolf

(56) Entgegenhaltungen:
- EP-A- 0 034 164
- EP-A- 1 972 675
- EP-A1- 1 302 410
- WO-A-96/10722
- WO-A-02/064445
- WO-A-2006/079828
- DE-A1- 2 607 168
- DE-A1- 2 849 161
- DE-A1- 4 415 946
- DE-C- 480 037
- US-B1- 7 240 513

## Beschreibung

Die Erfindung betrifft ein Temperierelement für den Einsatz als Temperaturstabilisator in Isolierverpackungen mit den Merkmalen des Oberbegriffs des Anspruchs 1 und ein Verfahren zum Betrieb eines Isolierbehälters mit einem solchen Temperierelement mit den Merkmalen des Oberbegriffs des Anspruchs 13.

Bei der Distribution von Arzneimitteln vom Großhändler zur Apotheke müssen diese häufig bei vorgeschriebenen Temperaturen gelagert und transportiert werden. Großhändler von Arzneimitteln betreiben daher temperaturgesteuerte und überwachte Lagereinrichtungen. Diese sind europaweit verteilt und ermöglichen die Lieferung von Arzneimitteln and Apotheken innerhalb weniger Stunden. Während Temperaturen der Lagereinrichtungen für kühlkettenpflichtige Medikamente und andere Artikel mit Hilfe von Temperaturaufzeichnungsgeräten dokumentiert und von lokalen Behörden turnusgemäß geprüft werden, werden die Temperaturen der Transporte nicht vollständig überwacht. In den meisten Fällen genügt die Vorlage einer Validierung, die mit entsprechend zertifizierten Messinstrumenten durchgeführt wurde, um die ordnungsgemäße Einhaltung der Kühlkette nachzuweisen.

Großhändler von Arzneimitteln setzen auch aufgrund des hohen Durchsatzes an kühlkettenpflichtigen Produkten auf passive Kühllösungen. Die Temperierung erfolgt dabei autonom in Isolierbehältern und ist während des Transportes unabhängig von jeglicher Energiezufuhr, wobei solche Isolierbehälter flexibel von unterschiedlichen Fahrzeugtypen und Personen transportiert werden. Häufig sind die Isolierbehälter mit Barcodes oder RFId (Radio Frequency Identification) ausgestattet, um den Ablauf der Befüllung und der Versendung weitestgehend zu automatisieren.

Für den Transport von Arzneimitteln, Blutprodukten sowie anderen kühlkettenpflichtigen Produkten ist es Stand der Technik, einen als Kühlelement mit Kühlfluid gefüllten und verschlossenen Hohlkörper einzufrieren und dieses verfestigte Kühlelement zusammen mit dem kühlkettenpflichtigen Produkt, welches z.B. bei 2 bis 8°C gelagert und transportiert werden muss, in einen Isolierbehälter zu geben. Bei höheren Umgebungstemperaturen stabilisiert das Kühlelement im verfestigten Zustand so lange die Innentemperatur des Behälters bis der Aggregatzustand des Kühlfluides komplett von fest in flüssig übergegangen ist, wobei zum Verflüssigen die komplette Schmelzenthalpie des Kühlfluides ΔH (kJ kg⁻¹) aufgebracht werden muss, welche bei wässrigen Kühlfluiden zwischen 200 und 330 kJ kg⁻¹ liegt. Da die gespeicherte Energiemenge beim Phasenübergang von fest zu flüssig im Vergleich zur Energiemenge eines flüssigen Fluides bei Erwärmung von beispielsweise 2 auf 8°C etwa 8 bis 13 mal größer ist, werden beim Stand der Technik häufig Kühlfluide eingesetzt, die ihren Phasenwechsel nahe der für das Produkt zu erzielenden Innentemperatur haben. Problematisch ist hierbei, dass Kühlfluid-gefüllte Elemente im verfestigten Zustand die Innentemperatur nur bei höherer Außentemperatur als die Solltemperatur im Innenraum des Isolierbehälters konstant halten können. Sinkt dagegen die Außentemperatur unter die des Schmelzpunktes des Kühlfluids ab, so hat das Kühlfluid im verfestigten Zustand nahezu keine temperaturstabilisierende Wirkung mehr. Dies liegt daran, dass kein Phasenwechsel mehr stattfindet.

Aus der DE 20 2006 017 869 U ist ein Isolierbehälter bekannt, der aus einem wärmeisolierenden Deckel und einem wärmeisolierenden Aufnahmeteil gebildet ist, die einen Innenraum umschließen, der zur Einhaltung von Temperaturen mit mindestens einem Temperierelement versehen ist. Mittels Konfigurierbarkeit von Anzahl und Position der Temperierelemente ist es möglich, alle herkömmlichen Verpackungsgrößen verschiedener Blutprodukte in diesem Isolierbehälter des Standes der Technik bei bestimmbar stabilen Temperaturen zu transportieren, wobei dieser Isolierbehälter sowohl zum Abkühlen als auch Erwärmen von Blutprodukten während eines Transports geeignet ist durch Temperierelemente mit verschiedenen Latentwärmespeichern mit hoher Wärme- oder Kältespeicherkapazität für die Bereiche von 2° C bis 6° C für Erythrozyten, 20° C bis 24° C für Thrombozyten und Vollblut und von -30° C bis -40° C für gefrorenes Frischplasma.

Dieses System des Standes der Technik arbeitet ausschließlich mit Temperierelementen, die jeweils für ein bestimmtes, prognostiziertes Temperaturintervall vortemperiert werden, so dass diese Systeme insbesondere dann problematisch in der Anwendung sind, wenn sich Außentemperaturen z. B. im Winter anders ergeben als vorher gesehen. Dann besteht die Gefahr, dass die Temperatur des Transportguts, z. B. Arzneimittel, die in den meisten Fällen bei 2 bis 8°C gelagert werden sollen, unter 0°C absinkt und es zum Gefrieren der Arzneimittel kommen kann. Viele Arzneimittel verlieren, nachdem sie einmal eingefroren waren, ihre Wirkung oder sind sogar gesundheitsschädlich für Patienten.

DE 28 49 161 A1 offenbart ein Verfahren zur Speicherung von Wärmeenergie in einem Solar-Wärmesystem, in dem möglichst viel Wärme bei geringen Temperaturdifferenzen übergehen soll.

DE 480 037 C offenbart einen Kältespeicher mit zwei Flüssigkeiten verschieden hohen Gefrierpunktes und Anordnung des Verdampfers einer Kältemaschine innerhalb der Flüssigkeit mit dem tiefer liegenden Gefrierpunkt. Die beiden Flüssigkeiten berühren sich unmittelbar. Die Flüssigkeit mit dem niederen Gefrierpunkt ist unterhalb der mit dem hohen Gefrierpunkt angeordnet, wenn das spezifische Gewicht der letzteren im erstarrten Zustand (Eis) kleiner ist als im flüssigen, dagegen oberhalb, wenn das spezifische Gewicht des Eises größer ist als das der Flüssigkeit.

EP-A 0 034 164 offenbart eine Vorrichtung zum Speichern und Austauschen von Wärme in einem geschlossenen System mit einem Verdampfer und einer Kammer für fest/flüssig Übergang.

WO 2006/079828 offenbart eine eutektische Platte mit einem Gehäuse, das ein Kühlmittel mit Phasenübergang und ein thermochromatisches Material enthält, das bei einer vorbestimmten Temperatur einen thermochromatischen Übergang durchläuft.

WO 96/10722 A offenbart ein Zwei-Schichtensystem zur Aufnahme und Speicherung von Energie in einem Solar-Wärmesystem, in dem ein möglichst hoher Wärmeübergang bei geringen Temperaturdifferenzen erzielt werden soll.

DE 4 415 946 A1 offenbart ein Temperierelement gemäß dem Oberbegriff des Anspruchs 1.

Aufgabe der Erfindung ist es, ein Temperierelement zu schaffen, das nicht ausschließlich für die Kühlung bei hohen Sommertemperaturen konzipiert ist sondern auch bei niedrigen Außentemperaturen unter 0°C, wie z. B. im Winter, bestimmbare, stabile Temperaturen gewährleistet und ein Verfahren zum Betrieb eines Isolierbehälters mit einem solchen Temperierelement.

Die Lösung erfolgt mit einem Temperierelement mit den Merkmalen des Anspruchs 1 und einem Verfahren zum Betrieb eines Isolierbehälters mit einem solchen Temperierelement mit den Merkmalen des Anspruchs 13. Vorteilhafte Ausgestaltungen der Erfindung sind in den Unteransprüchen dargestellt.

Gemäß der Erfindung wird ein Temperierelement für den Einsatz als Temperaturstabilisator in Isolierverpackungen mit einem Hohlkörper gebildet, der mit einem ersten Fluid gefüllt ist, das einen Schmelzpunkt in einem ersten Temperaturintervall hat. Mindestens ein weiteres Fluid, das einen Schmelzpunkt in einem zweiten, vom ersten unterschiedlichen Temperaturintervall hat, ist in dem Hohlkörper enthalten, wobei vorzugsweise das erste Fluid und das mindestens eine weitere Fluid sich entmischende Phasen bilden. Für bestimmungsgemäßen Gebrauch kann das erfindungsgemäße Temperierelement so vortemperiert werden, dass das erste Fluid mit dem höheren Schmelzpunkt beispielsweise bei 3°C verfestigt ist, während sich gleichzeitig ein weiteres Fluid mit niedrigerem Schmelzpunkt flüssig im Hohlkörper befindet. Wird das Temperierelement nun zusammen mit dem zu temperierenden Produkt in einen Isolierbehälter eingebracht, so bestehen hohe Energiebarrieren bei höheren und bei niedrigeren Umgebungstemperaturen gegen Veränderungen der Innentemperatur im Isolierbehälter. Sinkt nämlich die Temperatur außerhalb des Isolierbehälters unter die Solltemperatur von dessen Innenraum ab, so muss zum Verlassen des Solltemperaturbereichs im Innenraum die Energie zur Verfestigung des weiteren Fluides mit dem niedrigeren Schmelzpunkt, welches sich dann im flüssigen Zustand befindet, aufgebracht werden. Bei einer Außentemperatur oberhalb der Solltemperatur im Innenraum des Isolierbehälters muss dagegen die Energie zur Verflüssigung des ersten Fluides mit dem höheren Schmelzpunkt, welches dann im festen Zustand vorliegt, aufgebracht werden. Mit einem erfindungsgemäßen Temperierelement kann auch bei wechselhaften äußeren Temperaturbedingungen über einen langen Zeitraum Temperaturstabilität um das Transportgut im Innenraum des Isolierbehälters gewährleistet werden.

Gemäß einer bevorzugten Ausgestaltung der Erfindung weisen die Phasen des ersten Fluids und des mindestens einen weiteren Fluids unterschiedliche Farben auf für leichtere Verifizierbarkeit der Eigenschaften des erfindungsgemäßen Temperierelements.

Gemäß der Erfindung weist das erste Fluid einen Schmelzpunkt zwischen -2°C bis 3°C sowie das mindestens eine weitere Fluid einen Schmelzpunkt zwischen 4°C bis 8°C oder zwischen 18°C bis 24°C auf.

Gemäß einer weiteren bevorzugten Ausgestaltung der Erfindung ist mindestens eines der Fluide ein Wasser oder ein WasserSalzgemisch oder ein Hydrocarbon, insbesondere ein n-Paraffin, insbesonders ein n-Paraffin mit der linearen Struktur der Summenformel CₙH₂ₙ₊₂ oder noch insbesondere ein Hydrocarbon mit 12 bis 20 Kohlenstoffatomen.

Gemäß der Erfindung ist der Hohlkörper aus Kunststoff, insbesondere aus Polyethylen (PE) oder Polypropylen (PP), insbesondere High Density Polyethylen (HDPE) gefertigt.

Gemäß einer weiteren bevorzugten Ausgestaltung der Erfindung ist der Hohlkörper transparent oder durchscheinend für leichtere Verifizierbarkeit der Eigenschaften der Fluide im erfindungsgemäßen Temperierelement.

Gemäß einer weiteren bevorzugten Ausgestaltung der Erfindung hat der Hohlkörper eine diffusionshindernde Sperrschicht, insbesondere eine Fluor-, Silica- oder Polyamidsperrschicht.

Gemäß einer weiteren bevorzugten Ausgestaltung der Erfindung weist der Hohlkörper für verbesserte Validierung des Temperierelements eine Temperaturanzeige oder ein Temperaturaufzeichnungsgerät an seiner Oberfläche oder in seinem Inneren auf.

Gemäß einer weiteren bevorzugten Ausgestaltung der Erfindung kann mindestens ein Fluid ein Fluid einer anderen Phase in dem Hohlkörper umschließen, was entweder durch Mikroverkapselung, ein Detergens oder mit Hilfe eines Hochdruckhomogenisators erfolgen kann.

Gemäß einer weiteren bevorzugten Ausgestaltung der Erfindung enthält der Hohlkörper mindestens zwei Kammern, in denen mindestens zwei Fluide von einander getrennt sind für verbesserte Entmischung.

Gemäß weiterer bevorzugter Ausgestaltungen der Erfindung ist mindestens ein Fluid ein Salzhydrat und/oder liegt mindestens ein Fluid in Gel-Form vor.

Die Erfindung wird im Folgenden anhand eines bevorzugten Ausführungsbeispiels dargestellt. Es zeigen:
Fig. 1: einen horizontalen Querschnitt durch einen Hohlkörper des Temperierelements gemäß der Erfindung, und
Fig. 2: eine Darstellung der Zusammensetzung eines Fluids des Temperierelements gemäß der Erfindung.

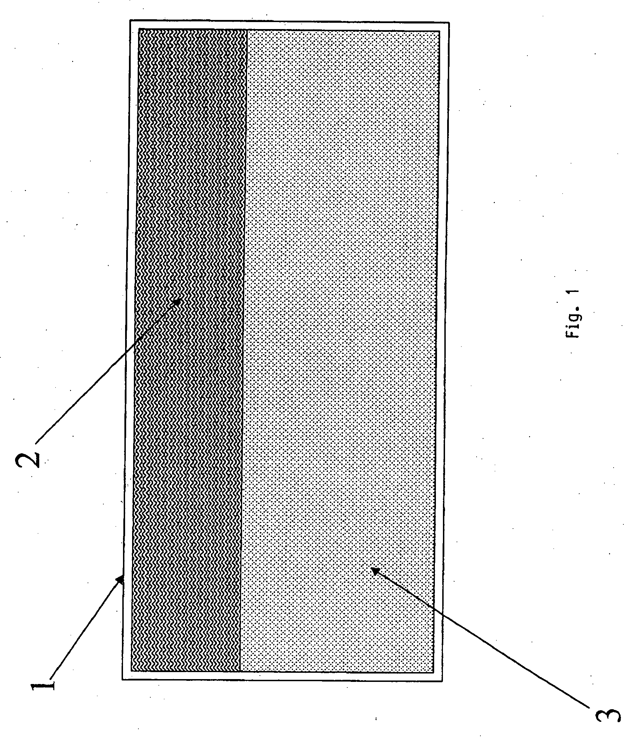

Fig. 1: Ein Temperierelement weist einen Hohlkörper 1 aus Kunststoff auf, der mit mindestens zwei Fluiden 2, 3, die jeweils hohe Schmelzenthapie aufweisen, gefüllt ist. Die Fluide 2, 3 lösen sich kaum ineinander und behalten so ihre physikalischen Eigenschaften weitestgehend bei, so dass mindestens zwei Phasen entstehen, die sich nach unterschiedlichen Dichten auftrennen.

Die Hohlkörperwand 1 besteht aus Polyethylen, Polypropylen, High Density Polyethylen oder Polyamid und/oder einer Polyamidschicht. Um die Diffusion herabzusetzen, kann die Wand des Hohlkörpers 1 eine Diffusionssperrschicht aus Silica, Siliziumoxid oder Fluor enthalten. Die in den Hohlkörper 1 eingefüllten Fluide 2, 3 bilden z. B. eine erste, leichte Phase 2 und eine weitere, schwere Phase 3, die sich nicht miteinander mischen.

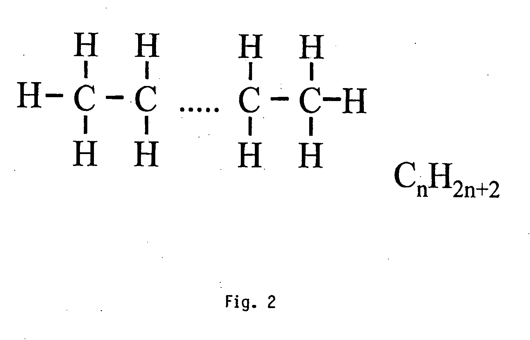

Die schwere Phase 3 enthält Wasser oder ein Wassersalzgemisch, welches einen Schmelzpunkt bei 0°C aufweist. Die leichte Phase 2 besteht aus einem Hydrocarbon- oder Paraffingemisch, wie in Fig. 2 dargestellt, welches einen Schmelzpunkt zwischen 4 bis 6°C aufweist. Bei 3°C ist die leichte Phase 2 fest und die schwere Phase 3 komplett flüssig.

### Verfahren zum Betrieb des Temperierelements

Das Temperierelement mit der schweren Phase 3 aus Wasser oder einem Wassersalzgemisch und der leichten Phase 2 aus Hydrocarbongemisch oder Paraffingemisch wird auf 3°C vortemperiert und als Temperaturstabilisator in einen Isolierbehälter (nicht dargestellt) gegeben, um im Gegensatz zu einem herkömmlichen Kühlelement sowohl bei hohen als auch niedrigen Außentemperaturen gleichermaßen zu stabilisieren.

Dies wird an den beiden Szenarien A) und B) deutlich:
A) Die Außentemperatur ist höher als die Solltemperatur im Innenraum des Isolierbehälters. In diesem Fall wird Wärme durch die Wand des Isolierbehälters in dessen Innenraum geleitet und so lange von der festen leichten Phase 2 aufgenommen, bis diese komplett verflüssigt ist, bevor die Temperatur des befüllten Hohlkörpers 1 über den Schmelzpunkt der Phase 2 ansteigt.
B) Die Außentemperatur ist niedriger als die Solltemperatur im Innenraum des Isolierbehälters. In diesem Fall wird Wärme durch die Wand des Isolierbehälters aus dessen Innenraum nach draußen geleitet und so lange von der flüssigen schweren Phase 3 abgegeben, bis diese komplett verfestigt ist, bevor die Temperatur des befüllten Hohlkörpers 1 unter den Schmelzpunkt 3 absinkt.

Das zu temperierende Produkt ist somit gegen Außentemperaturen, die sowohl höher als auch niedriger sind als die Solltemperatur im Innenraum des Isolierbehälters, geschützt.

## Patentansprüche

1. Temperierelement für den Einsatz als Temperaturstabilisator zusammen mit einem zu temperierenden Produkt in einem Isolierbehälter, wobei das Temperierelement mit einem aus Kunststoff gefertigten Hohlkörper (1) gebildet ist, der mit einem ersten Fluid (2) gefüllt ist, das einen Schmelzpunkt in einem ersten Temperaturintervall hat und in dem Hohlkörper (1) mindestens ein weiteres Fluid (3) enthalten ist, das einen Schmelzpunkt in einem zweiten Temperaturintervall hat, **dadurch gekennzeichnet, dass** mindestens zwei Phasen entstehen, die sich nach unterschiedlichen Dichten auftrennen und das erste Fluid (2) und das mindestens eine weitere Fluid (3) sich entmischende Phasen bilden, wobei das erste Fluid (2) einen Schmelzpunkt von -2° C bis +3° C sowie das mindestens eine weitere Fluid (3) einen Schmelzpunkt von 4° C bis 8° C oder 18° C bis 24° C aufweisen.

2. Temperierelement gemäß Anspruch 1, **dadurch gekennzeichnet, dass** die Phasen des ersten Fluids (2) und des mindestens einen weiteren Fluids (3) unterschiedliche Farben aufweisen.

3. Temperierelement gemäß Anspruch 1, **dadurch gekennzeichnet, dass** mindestens eines der Fluide (2, 3) ein Wasser oder ein Wasser Salzgemisch ist.

4. Temperierelement gemäß Anspruch 1, **dadurch gekennzeichnet, dass** mindestens ein Fluid (2, 3) ein Hydrocarbon, insbesondere ein n-Paraffin, ganz besonders ein n-Paraffin mit der linearen Struktur der Summenformel CₙH₂ₙ₊₂ und ganz besonders ein Hydrocarbon mit 12 bis 20 Kohlenstoffatomen ist.

5. Temperierelement gemäß Anspruch 1, **dadurch gekennzeichnet, dass** der Hohlkörper (1) aus Polyethylen (PE) oder Polypropylen (PP) ganz besonders High Density Polyethylen (HDPE) gefertigt ist.

6. Temperierelement gemäß Anspruch 1, **dadurch gekennzeichnet, dass** der Hohlkörper (1) transparent oder durchscheinend ist.

7. Temperierelement gemäß Anspruch 5, **dadurch gekennzeichnet, dass** der Hohlkörper (1) eine Sperrschicht insbesondere eine Fluor, Silica- oder Polyamidsperrschicht aufweist.

8. Temperierelement gemäß Anspruch 1, **dadurch gekennzeichnet, dass** der Hohlkörper (1) eine Temperaturanzeige oder ein Temperaturaufzeichnungsgerät an der Oberfläche oder im Inneren aufweist.

9. Temperierelement gemäß Anspruch 1 **dadurch gekennzeichnet, dass** mindestens ein Fluid (2) ein Fluid (3) einer anderen Phase in dem Hohlkörper (1) umschließt.

10. Temperierelement gemäß Anspruch 1 **dadurch gekennzeichnet, dass** der Hohlkörper (1) mindestens zwei Kammern enthält, in denen mindestens zwei Fluide von einander getrennt sind.

11. Temperierelement gemäß Anspruch 1 **dadurch gekennzeichnet, dass** mindestens ein Fluid (2, 3) ein Salzhydrat ist.

12. Temperierelement gemäß Anspruch 1 **dadurch gekennzeichnet, dass** mindestens ein Fluid (2, 3) in Gel-Form vorliegt.

13. Verfahren zum Betrieb eines Isolierbehälters mit einem Temperierelement zusammen mit einem zu temperierenden Produkt in dem Isolierbehälter gemäß einem der vorhergehenden Ansprüche, **gekennzeichnet durch** Vortemperieren des Hohlkörpers (1) mit einem ersten Fluid (2), das einen Schmelzpunkt in einem ersten Temperaturintervall hat, und mindestens einem weiteren Fluid (3), das einen Schmelzpunkt in einem zweiten Temperaturintervall hat, auf eine Temperatur zwischen dem ersten Temperaturintervall und dem zweiten Temperaturintervall und Einbringen des Hohlkörpers (1) in einen Innenraum des Isolierbehälters als Temperaturstabilisator.

## Claims

1. Tempering element for the operation as temperature stabilisator together with a product to be tempered in an isolation container, said tempering element being defined by a hollow body (1) made of plastic material and being filled with a first fluid (2) with a fusion point in a first temperature interval and in that in the hollow body (1) is at least one more fluid (3) with a fusion point in a second temperature interval, **characterized in that** at least two phases are provided that separate towards differents densities, said first fluid (2) and the at least one more fluid (3) providing segregating phases, said first fluid (2) having a fusion point between -2° C and +3° C and said at least one more fluid (3) having a fusion point between 4° C and 8° C or 18° C and 24° C.

2. Tempering element according to claim 1, **characterized in that** the phases of the first fluid (2) and of the at least one more fluid (3) have different colors.

3. Tempering element according to claim 1, **characterized in that** at least one of the fluids (2, 3) is water or a water salt blend.

4. Tempering element according to claim 1, **characterized in that** at least one fluid (2, 3) is a hydrocarbon, particularly a n-paraffin, more particularly a n-paraffin with the linear structure of the sum-formula CₙH₂ₙ₊₂ and even more particularly a hydrocarbon with 12 to 20 carbon-atoms.

5. Tempering element according to claim 1, **characterized in that** the hollow body (1) is made of polyethylene (PE) or polypropylene (PP), more particularly a high density polyethylene (HDPE).

6. Tempering element according to claim 1, **characterized in that** the hollow body (1) is transparent or translucent.

7. Tempering element according to claim 5, **characterized in that** the hollow body (1) is provided with a barrier layer, particularly a fluor, silica or polyamide barrier layer.

8. Tempering element according to claim 1, **characterized in that** the hollow body (1) is provided with a temperature display or a temperature recording device at the surface or in the interior.

9. Tempering element according to claim 1, **characterized in that** at least a fluid (2) encloses a fluid (3) of a different phase inside the hollow body (1).

10. Tempering element according to claim 1, **characterized in that** the hollow body (1) comprises at least two chambers inside which at least two fluids are separated from each other.

11. Tempering element according to claim 1, **characterized in that** at least one fluid (2, 3) is a salt hydrate.

12. Tempering element according to claim 1, **characterized in that** at least one fluid (2, 3) is provided in the form of a gel.

13. Method for operating an insolated container with a tempering element together with a product to be tempered according to one of the preceding claims, **characterized in that** by pretempering of the hollow body (1) with a first fluid (2) with a fusion point in a first temperature interval and at least one more fluid (3) with a fusion point in a second temperature interval to a temperature between the first temperature interval and the second temperature interval and inserting of the hollow body (1) in an inner chamber of the isolation container as temperature stabilisator.

## Revendications

1. Elément d'équilibrage des températures pour la mise en action comme stabilisateur de température ensemble avec un produit à tempérer dans un récipient d'isolation, l'élément d'équilibrage des températures étant formé d'un corps creux (1) fabriqué en matière plastique et rempli d'un premier fluide (2) avec un point de fusion dans un premier intervalle de température et en ce que au moins un autre fluide (3) est contenu dans le corps creux (1) avec un point de fusion dans un deuxième intervalle de température, **caractérisé en ce que** au moins deux phases se produisent, qui se séparent selon des densités différentes avec le premier fluide (2) et le au moins autre fluide (3) formant des phases qui se dissocient, le premier fluide (2) ayant un point de fusion entre -2° C à 3° C et le au moins autre fluide (3) ayant un point de fusion entre 4° C à 8° C ou entre 18° C à 24° C.

2. Elément d'équilibrage des températures selon la revendication 1, **caractérisé en ce que** les phases du premier fluide (2) et du au moins autre fluide (3) ont des couleurs différentes.

3. Elément d'équilibrage des températures selon la revendication 1, **caractérisé en ce que** au moins un des fluides (2, 3) est de l'eau ou un mélange d'eau et sel.

4. Elément d'équilibrage des températures selon la revendication 3, **caractérisé en ce que** au moins un fluide (2, 3) est un hydrocarbon, particulièrement une n-paraffine, plus particulièrement une n-paraffine avec la structure linéaire de la formule de sommation CₙH₂ₙ₊₂ et encore plus particulièrement un hydrocarbon avec 12 à 20 atomes de carbone.

5. Elément d'équilibrage des températures selon la revendication 1, **caractérisé en ce que** le corps creux (1) est fait de polyéthylène (PE) ou polypropylène (PP), particulièrement High Density polyéthylène (HDPE).

6. Elément d'équilibrage des températures selon la revendication 1, **caractérisé en ce que** le corps creux (1) est transparent ou translucide.

7. Elément d'équilibrage des températures selon la revendication 5, **caractérisé en ce que** le corps creux (1) a une couche de jonction, particulièrement une couche de jonction de fluor, silica ou polyamide.

8. Elément d'équilibrage des températures selon la revendication 1, **caractérisé en ce que** le corps creux (1) a une indication de température ou un dispositif de registration des températures à la surface ou à l'intérieur.

9. Elément d'équilibrage des températures selon la revendication 1, **caractérisé en ce que** au moins un fluide (2) renferme un fluide (3) d'une autre phase dans le corps creux (1).

10. Elément d'équilibrage des températures selon la revendication 1 ou 10, **caractérisé en ce que** le corps creux (1) contient au moins deux cellules dans lesquelles au moins deux fluides sont sépareés l'un de l'autre.

11. Elément d'équilibrage des températures selon la revendication 1, **caractérisé en ce que** au moins un fluide (2, 3) est un hydrate de sel.

12. Elément d'équilibrage des températures selon la revendication 1, **caractérisé en ce que** au moins un fluide (2, 3) est en forme de gel.

13. Procédé destiné au fonctionnement d'un récipient d'isolation avec un élément d'équilibrage des températures ensemble avec un produit à tempérer dans le récipient d'isolation selon une des revendications précédentes, **caractérisé par** prétempérer le corps creux (1) avec un premier fluide (2) avec un point de fusion dans un premier intervalle de température et avec au moins un autre fluide (3) avec un point de fusion dans un deuxième intervalle de température, à une température entre le premier intervalle de température et le deuxième intervalle de température et insertion du corps creux (1) dans un intérieur du récipient d'isolation comme stabilisateur de température.
